# EUROPÄISCHE PATENTANMELDUNG

(11) **EP 0 855 294 A2**
(43) Veröffentlichungstag der Anmeldung: **29.07.1998**
(21) Anmeldenummer: 98810026.9
(22) Anmeldetag: 21.01.1998
(51) Int. Cl.: B60C 23/12

(54) **Einrichtung zur Regelung des Innendruckes bei Kraftfahrzeugreifen**

(30) Priorität: 22.01.1997 DE 19702055
(71) Anmelder: Wulff, Gunther, Dr., 8260 Stein am Rhein (CH); Wychnanek, Rainer, 97532 Üchtelhausen-Madenhausen (DE)
(72) Erfinder: Wulff, Gunther, Dr., 8260 Stein am Rhein (CH); Wychnanek, Rainer, 97532 Üchtelhausen-Madenhausen (DE)
(74) Vertreter: Peege, Klaus

(57) **Zusammenfassung**

Die Erfindung betrifft eine Einrichtung zur Regelung bzw. Konstanthaltung des Luftdruckes im Innenraum eines Reifens auf einem Fahrzeugrad (1), die als eigenständige Einrichtung auf das jeweilige Fahrzeugrad beschränkt ist und mindestens eine Kolbenpumpe (2) umfaßt, deren Kolben (5) mit Massen (7) versehen sind, deren Trägheit eine Relativbewegung zum Pumpengehäuse erzeugen, wobei die Massen (7) auf Fliehkräfte und Drehbeschleunigungskräfte, sowie auf Massenträgheitskräfte beim Überfahren von Bodenunebenheiten reagieren. Die in der Kolbenpumpe (2) komprimierte Luft wird in den Innenraum eines Reifens gepumpt und über ein Überdruckventil konstant gehalten. Der Vorteil der Einrichtung liegt in seiner rotationssymmetrischen Ausgestaltung, die es erlaubt, hohe Geschwindigkeiten ohne unwuchtbedingte Erschütterungen zu fahren.

## Beschreibung

Die Erfindung betritt eine Einrichtung zur Regelung bzw. Konstanthaltung des Luftdruckes im Innenraum eines Reifens auf einem Fahrzeugrad, die als eigenständige Einrichtung auf das jeweilige Fahrzeugrad beschränkt ist, gemäß dem Oberbegriff des Anspruchs 1.

Mit der WO 95/19271 ist eine automatische eigenständige und nicht mit der Karosserie verbundene Kolbenpumpe zum Aufpumpen eines Fahrzeugreifens bekannt, die an der Felge des Fahrzeugrades montiert ist und einen Kolben in einem Zylinder aufweist, der durch eine Feder in einer definierten Ruhelage gehalten wird, wobei die Masse des Kolbens auf Kräfte reagiert, die entweder bei der Drehung der Felge als Fliehkräfte bei höheren Drehzahlen oder beim Überfahren von Fahrbahnunebenheiten als Massenkräfte erzeugt werden. Bei Fahrzeugen, die hohe Geschwindigkeiten erreichen, müssen die Felgen zusammen mit den Reifen gemeinsam ausgewuchtet sein; die Abweichungen von der idealen Null-Wuchtung müssen sich in engen Grenzen bewegen. Allein die radiale Auslenkung des Kolbens gegenüber der Feder verändert den Wuchtzustand des Rades derart, daß es zu untolerierbaren Erschütterungen des Fahrzeuges bei hohen Geschwindigkeiten kommt. Es sind zwar statische Auswuchthilfen vorgesehen, die die Felge mit dem Reifen im Ruhezustand möglicherweise für niedrige Geschwindigkeiten zufriedenstellend auswuchten helfen. Bei hohen Geschwindigkeiten jedoch treten sehr hohe Kräfte auf, die den Kolben auslenken und die vorgenannten nachteilhaften Erschütterungen in der Karosserie des Fahrzeuges bewirken.

Mit der EM 600 037 B1 ist eine ebenfalls auf der Felge eines Fahrzeugrades montierte Kolbenpumpe bekannt geworden, die außermittig und tangential zur Bahn der Raddrehung in der Linie der Hin- und Herbewegung des Kolbens plaziert ist. Der Kolben ist frei beweglich und reagiert auf die Gravitationskräfte, die bei der Drehung sowie bei Erschütterungen durch das Überfahren von Bodenunebenheiten an der Felge auftreten. Die Felge ist durch die Anordnung der Kolbenpumpe wie schon bei der unter der WO 95/19 271 genannten Anordnung der Kolbenpumpe einseitig mit Gewichten belastet, die ausgeglichen werden müssen, wobei unter dynamischen Verhältnissen durch die Freibeweglichkeit des Kolbens immer noch keine exakte Wuchtung möglich ist.

Es ist daher die Aufgabe der Erfindung, eine am Fahrzeugrad befestigte eigenständige und nicht mit der Karosserie des Fahrzeugs in Verbindung stehende Einrichtung zur Regelung bzw. Konstanthaltung des Luftdruckes im Innenraum eines auf diesem Fahrzeugrad befestigten Reifens zu schaffen, die derart angeordnet ist, daß keine Erschütterung durch Unwuchten auch bei höheren Fahrgeschwindigkeiten auftreten, und daß größere konstruktive Eingriffe in die Beschaffenheit des serienmäßigen Fahrzeugrades entfallen.

Die Lösung dieser Aufgabe ist den in Ansprüchen beschrieben.

Mehrere Beispiele von Einrichtungen zur Regelung des Luftdrucks von Reifen werden in den folgenden Skizzen beschrieben. Es zeigen:
- Fig. 1: eine Einrichtung zur Luftdruckregelung im Fahrzeugreifen mit einer Kolbenpumpe an einem dem Fahrzeugrad vorgesetzten Felgengehäuse mit einer Schwungmasse, die mit Kolben über eine Kurbelwelle verbunden ist;
- Fig. 2: eine Kolbenpumpe in einem Felgengehäuse mit einer freischwingenden Masse, die mit dem Kolben direkt verbunden ist;
- Fig. 3: eine Kolbenpumpe in einem Felgengehäuse mit sternförmig angeordneten Zylindern, in denen Kolben freibeweglich sind, denen jeweils eine Masse zugeordnet ist, sowie eine Einzelheitszeichnung.

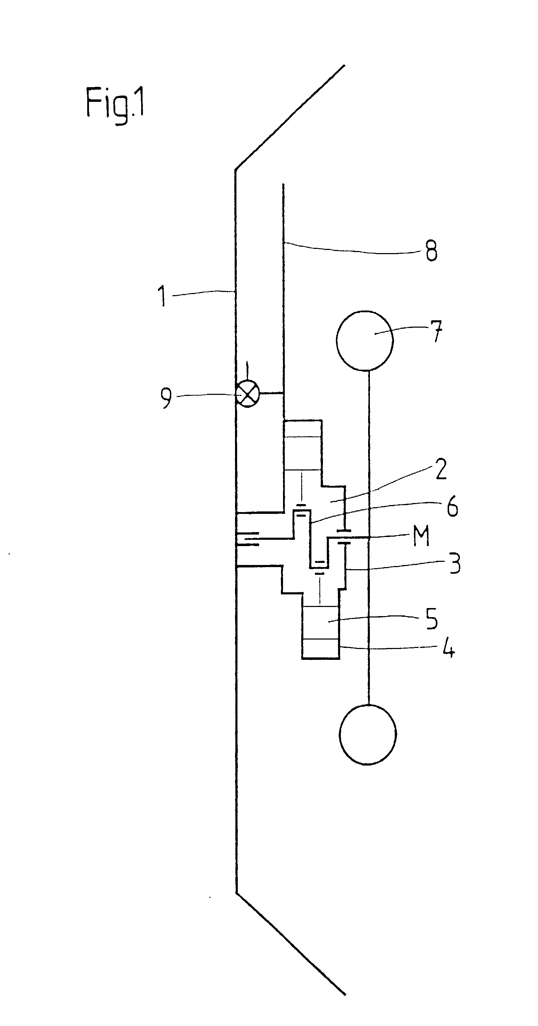

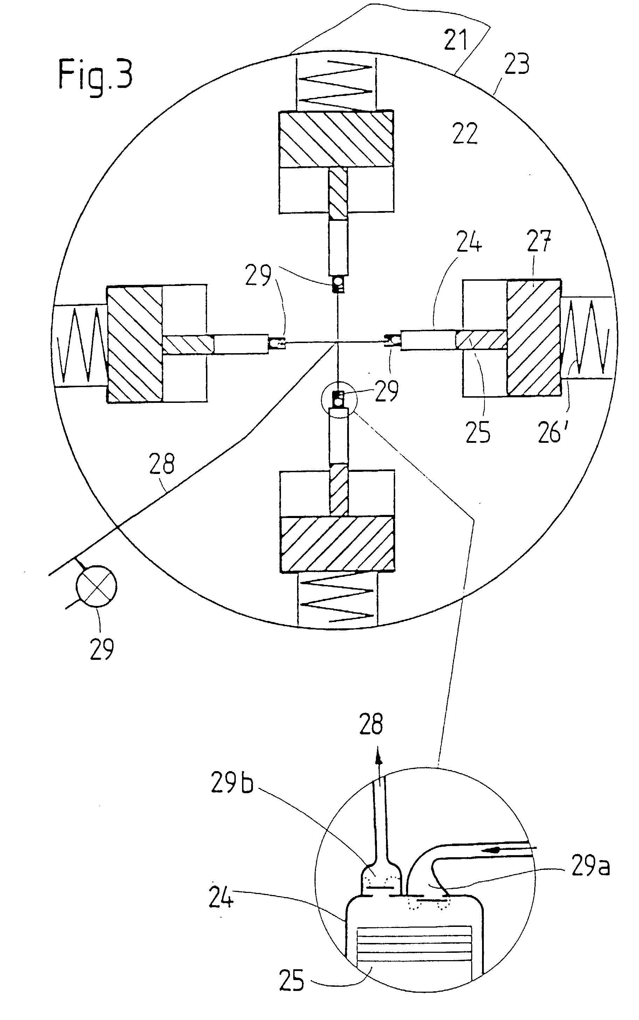

Gemäß Fig. 1 wird eine Einrichtung zur Regelung bzw. Konstanthaltung des Luftdruckes im Innenraum eines Reifens auf einem Fahrzeugrad beschrieben, die als eigenständige Einrichtung auf das jeweilige Fahrzeugrad beschränkt ist und an einem Felgengehäuse 1 angeordnet ist, welches an dem Fahrzeugrad, ähnlich einer Radkappe, konzentrisch zu einer Mittelachse M des Fahrzeugrads an diesem befestigt wird; die Einrichtung ist also von außerhalb nicht sichtbar und mit handelsüblichen Fahrzeugrädern auf diese Weise verbindbar. Die Einrichtung selbst umfaßt eine Kolbenpumpe 2 mit einem Pumpengehäuse, in welchem mindestens ein Zylinder 4 angeordnet ist, in welchem ein Kolben 5 hin und her bewegbar ist. Die Kolben sind mit einer Masse 7 über eine Kurbelwelle 6 verbunden, wobei die Masse 7 ein Schwungrad ist, welches bei Drehung gegenüber dem Pumpengehäuse 2 die Kolben 5 zu Hin- und Herbewegungen veranlaßt. Die Kolbenpumpe 2 saugt durch die Hin- und Herbewegungen der Kolben 5 Umgebungsluft an, komprimiert diese, und leitet sie über eine Druckleitung 8 in den Innenraum des Reifens weiter, vorausgesetzt, die Kolbenpumpe verfügt über die entsprechenden Ventile, welche üblicherweise aus einem ersten zylinderwärts durchströmbaren Rückschlagvenil 29 a zum Ansaugen von Umgebungsluft sowie aus einem zweiten Rückschlagventil 29b besteht, welches Druckluft vom Inneren des Zylinders 4 über die Druckleitung 8 zum Reifen hin passieren läßt, wie es in der Einzelheitszeichnung der Fig. 3 dargestellt ist. Mit Hilfe des Überdruckventils 9 wird der Luftdruck im Reifen begrenzt, jedoch der Tätigkeit der Kolbenpumpe 2 kein Einhalt geboten. Für bestimmte Anwendungsfälle empfiehlt es sich, das Überdruckventil 9 einstellbar auszuführen, da bei unterschiedlichen Fahrzeugbelastungen und/oder unterschiedlichen Fahrbahnverhältnissen unterschiedliche Luftdruckverhältnisse im Reifen erforderlich sind.

Die Wirkungsweise der Kolbenpumpe 2 ist abhängig von der Bewegung des Fahrzeuges und somit von der Drehzahl bzw. der Drehzahländerung des Fahrzeugrades. Beschleunigt das Fahrzeug, so bleibt die Masse 7 in Form des Schwungrades zurück, dreht also langsamer als die Kolbenpumpe 2 mit ihrem Pumpengehäuse 3, das mit der Drehzahl des Fahrzeugrades umläuft, wodurch die Kurbelwelle die Kolben 5 mit der jeweils auftretenden Differenzdrehzahl zwischen Fahrzeugrad und Schwungrad antreibt. Es wird Umgebungsluft angesaugt, komprimiert und in das Innere des Reifens über die Druckleitung 8 transportiert. Ist der hierbei auftretende Druck größer als der durch das Überdruckventil 9 limitierte Innendruck des Reifens, so wird die von der Kolbenpumpe 2 komprimierte Umgebungsluft ohne Umwege ins Freie gepumpt. Die Anordnung der Einrichtung ist in dem Felgengehäuse 1 rotationssymmetrisch angeordnet, und hat somit auf den Wuchtzustand des Fahrzeugrades keinen Einfluß.

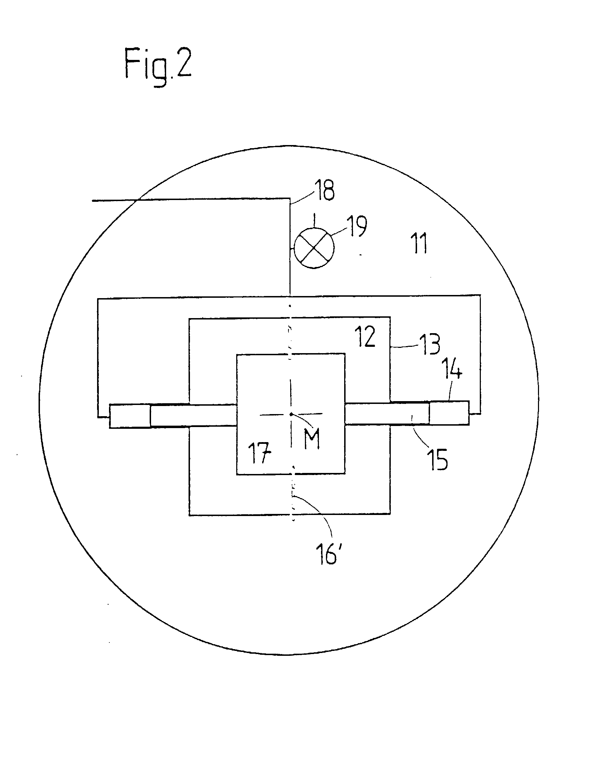

Gemäß Fig. 2 wird eine Einrichtung zur Regelung bzw. Konstanthaltung des Luftdruckes im Innenraum eines Reifens auf einem Fahrzeugrad beschrieben, die ebenfalls als eigenständige Einrichtung auf das jeweilige Fahrzeugrad beschränkt ist und an einem Felgengehäuse 11 angeordnet ist, welches an dem Fahrzeugrad, ähnlich einer Radkappe, konzentrisch um die Mittelachse M des Fahrzeugrades an diesem befestigt wird. Die Einrichtung ist also von außerhalb nicht sichtbar und soll mit handelsüblichen Fahrzeugrädern auf diese Weise verbindbar sein. Die Einrichtung selbst umfaßt eine Kolbenpumpe 12 mit einem Pumpengehäuse 13, in welchem mindestens ein Zylinder 14 angeordnet ist, in dem mindestens ein Kolben 15 hin und her beweglich ist. In der vorgeschlagenen Ausgestaltung sind im Pumpengehäuse 13 zwei gegenüberliegende, auf einer Achse liegende Zylinder 14 angeordnet, in denen zwei Kolben hin und her beweglich sind, die miteinander über eine Masse 17 verbunden sind. Die Kolben 15 und die Masse 17 bilden somit eine Einheit, die frei beweglich gegenüber dem Pumpengehäuse 13 angeordnet sind und durch die Hin- und Herbewegung Pumparbeit in den Zylindern 14 ausüben. Es ist vorteilhaft, wenn zur Erhaltung des konzentrischen Wuchtzustandes die Masse 17 mit ihrem Schwerpunkt im wesentlichen auf der Mittelachse M gehalten wird, wodurch eine Membranfeder 16' angeordnet ist, die die Rückstellung der Masse 17 in die gewünschte Ausgangslage garantiert. Durch die Hin- und Herbewegungen der Kolben 15 wird Umgebungsluft angesaugt, komprimiert und über eine Druckleitung 18 in den Innenraum des Reifens weitergeleitet, vorausgesetzt, die Kolbenpumpe 12 verfügt über die entsprechenden Ventile, wie sie oben beschrieben sind. In der Druckleitung 18 ist ein Überdruckventil 19 angeordnet, das den Luftdruck im Reifen begrenzt, aber ohne Einfluß auf die Funktion der Kolbenpumpe 12 ist.

Die Wirkungsweise der Kolbenpumpe ist abhängig von der Bewegung des Fahrzeugrades, die dadurch entsteht, daß das Fahrzeugrad über Unebenheiten der Fahrbahn rollt. Den hierdurch auftretenden Vertikalbewegungen des Fahrzeugrades kann die träge Masse 17 nicht folgen und erzeugt über die Kolben 15 Relativbewegungen zu den mit dem Fahrzeugrad gemeinsam schwingenden Zylindern 14, die zu Pumpbewegungen ausgenützt werden. Wenn sich die Masse 17 von der Mittelachse M entfernt, unterliegt sie der Fliehkraft durch die Rotation des Fahrzeugrades, die aber von der Membranfeder 16' kompensiert wird, wobei sich die oszillierenden Bewegungen der Masse im wesentlichen um die zentrale Mittelachse M bewegen. Durch die Pumpbewegungen wird Umgebungsluft angesaugt, komprimiert und in das Innere des Reifens über dir Druckleitung 18 transportiert.

Gemäß Fig. 3 wird eine Einrichtung zur Regelung bzw. Konstanthaltung des Luftdruckes im Innenraum eines Reifens auf einem Fahrzeugrad beschrieben, die als eigenständige Einrichtung auf das jeweilige Fahrzeugrad beschränkt ist, und an einem Felgengehäuse 21 angeordnet ist, welches an dem Fahrzeugrad, ähnlich einer Radkappe, konzentrisch um eine Mittelachse M des Fahrzeugrades befestigt wird. Die Einrichtung umfaßt eine Kolbenpumpe 22 mit einem Pumpengehäuse 23, in welchem mindestens ein Zylinder 24 angeordnet ist, in welchem ein Kolben 25 hin und her bewegbar ist. Jeder der Kolben 25 weist eine Masse 27 auf, die sich über eine Rückstellfeder 26' gegen das Pumpengehäuse 23 abstützt. Aus Gründen der Rotationssymmetrie sind die Zylinder 24 sternförmig um die Mittelachse angeordnet, wobei die Achsen der Zylinder 24 zueinander immer einen gleich großen Winkel bieten. Jeder Zylinder 24 stellt mit seinem Kolben 25 eine Kolbenpumpe 22 dar, welche in eine Druckleitung 28 zusammengeführt wird, die mit dem Innenraum des Reifens in Verbindung steht. Die Druckleitung 28 weist ein Überdruckventil 29 auf, welches einstellbar sein kann und dafür sorgt, daß der Innendruck des Reifens einen zu jeder Zeit konstanten Luftdruck aufweist. Die Wirkungsweise der Kolbenpumpe 2 ist abhängig von der Bewegung des Fahrzeuges, und somit von der Drehzahl bzw. Drehzahländerung des Fahrzeugrades in der Weise, daß die Massen 27 sowohl den Fliehkräften als auch den durch Bodenunebenheiten verursachten Massenkräften ausgesetzt sind. Während sich über Fliehkräfte allein noch keine Pumpbewegungen bewerkstelligen lassen, sind es die oszillierenden Vertikalbewegungen, die den in der Hauptsache senkrecht zur Fahrbahn befindlichen Kolben 25 eine Relativbewegung zu den am Fahrzeugrad festen Zylindern 24 aufzwingen, die zu Pumpbewegungen in den einzelnen Kolbenpumpen 22 führt. Hierdurch wird Umgebungsluft angesaugt, komprimiert und über die Druckleitung in den Innenraum des Reifens transportiert. Das Überdruckventil 29 leitet bei korrektem Luftdruck im Reifen die transportierte Luft ins Freie. Die Anordnung der Rückschlagventile 29a und 29b an den Zylindern 24 ist in der Einzelheitszeichung der Fig. 3 dargestellt.

## Patentansprüche

1. Einrichtung zur Regelung bzw. Konstanthaltung des Luftdruckes im Innenraum eines Reifens auf einem Fahrzeugrad mit einer Kolbenpumpe (2,12,22), deren Gehäuse mit der Radfelge über ein Felgengehäuse (1,11,21) verbunden ist, und die durch die beim Abrollen des Reifens entstehenden Fliehkräfte und Drehbeschleunigungskräfte sowie durch Massenträgheitskräfte beim Überfahren von Bodenunebenheiten angetrieben wird, und als eigenständige Einrichtung ohne Verbindung mit der Karosserie des Fahrzeuges Umgebungsluft über eine Druckleitung (8,18,28) in den Innenraum des Reifens pumpt, wobei ein einstellbares Druckbegrenzungsventil (9,19,29) in der Druckleitung (8,18,28) den Innendruck des Reifens begrenzt,
dadurch gekennzeichnet,
daß die Kolbenpumpe (2,12,22) auf dem Felgengehäuse (1,11,21) derart angeordnet ist, daß ihr Schwerpunkt im wesentlichen mit der Mittelachse (M) der Fahrzeugrades zusammenfällt und zur Aufrechterhaltung der Rotationssymmetrie beim Abrollen des Fahrzeugrades durch eine Masse (7,17,27) angetrieben wird, deren Schwerpunkt ebenfalls mit der Mittelachse (M) des Fahrzeugrades zusammenfällt.

2. Einrichtung nach Anspruch 1,
dadurch gekennzeichnet,
daß die Masse (7) ein Schwungrad ist, das mit einer Kurbelwelle (6) der Kolbenpumpe (2) verbunden ist, und auf die Änderungen der Drehgeschwindigkeit des Fahrzeugrades mit Relativdrehungen gegenüber dem Fahrzeugrad reagiert, wodurch die Kolbenpumpe (2) Umgebungsluft ansaugt und über eine Druckleitung (8) in den Innenraum des Reifens pumpt.

3. Einrichtung nach Anspruch 1,
dadurch gekennzeichnet,
daß die Masse (12) mit mindestens zwei Kolben (15) derart verbunden ist, daß sie diese beim Überfahren des Fahrzeugrades von Bodenunebenheiten relativ zum radfesten Pumpengehäuse (13) in ihren Zylindern (14) hin und her bewegt, wodurch die Kolbenpumpe (12) Umgebungsluft ansaugt und über eine Druckleitung (18) in den Innenraum des Reifens pumpt.

4. Einrichtung nach Anspruch 1,
dadurch gekennzeichnet,
daß die Masse aus mehreren Einzelmassen (27) besteht, von denen jede mit einem Kolben (25) verbunden ist, wobei die Kolben (25) durch auf die Massen (27) wirkende Massenkräfte beim Überfahren von Unebenheiten der Fahrbahn in ihren Zylindern (24) hin und her bewegt werden, wodurch die Kolbenpumpe (22) Umgebungsluft ansaugt und über eine Druckleitung (28) in den Innenraum des Reifens pumpt.

5. Einrichtung nach Anspruch 4,
dadurch gekennzeichnet,
daß die Massen (27) gegen eine Rückstellfeder (26') wirken, die der Fliehkraft der Massen (27) entgegengerichtet ist und zu jeder möglichen Drehzahl des Fahrzeugrades eine definierbare Ruheposition der Kolben (25) innerhalb bestimmter Endpositionen in ihren Zylindern (24) einnehmen läßt.

6. Einrichtung nach Anspruch 3,
dadurch gekennzeichnet,
daß die Masse (17) gegenüber dem Pumpengehäuse (13) mittels einer Membranfeder (16') verbunden ist, welche durch ihre Federwirkung den durch die Einwirkung von Bodenunebenheiten entstehenden Verstellkräften entgegenwirkt und die Masse (12) mit ihrem Schwerpunkt auf die Position der Mittel achse (M) des Fahrzeugrades zurückführt.
